# EUROPEAN PATENT SPECIFICATION

(11) **EP 3 121 926 B1**
(45) Date of publication and mention of the grant of the patent: **05.12.2018**
(21) Application number: 16177170.4
(22) Date of filing: 30.06.2016
(51) Int. Cl.: H02J 7/00

(54) **CHARGING METHOD AND APPARATUS**
AUFLADEVERFAHREN UND -VORRICHTUNG
PROCÉDÉ ET DISPOSITIF DE CHARGEMENT

(30) Priority: 20.07.2015 CN 201510428970
(43) Date of publication of application: 25.01.2017
(73) Proprietor: Xiaomi Inc., Beijing 100085 (CN)
(72) Inventor: LEI, Zhenfei, Haidian District, Beijing 100085 (CN); SUN, Wei, Haidian District, Beijing 100085 (CN); WANG, Xiangdong, Haidian District, Beijing 100085 (CN)
(74) Representative: Hughes, Andrea Michelle

(56) References cited:
- EP-A1- 2 911 036
- US-A1- 2007 236 975
- US-A1- 2011 016 333
- Stormy Beach: "New device to device charging cable announced by Samsung", , 23 September 2014 (2014-09-23), XP055318001, Retrieved from the Internet: URL:http://androidspin.com/2014/09/23/new- device-device-charging-cable-announced-sam sung/ [retrieved on 2016-11-09]

## Description

### TECHNICAL FIELD

The present disclosure generally relates to the field of smart device technology, and more particularly, to a charging method and apparatus.

### BACKGROUND

Smart devices are playing an increasingly important role in people's daily life. However, due to the small capacity of a built-in battery, a portable smart device such as a smart mobile phone has the problem of short endurance time. In order to solve the problem of short endurance time, a user generally carries a mobile power supply to provide extra electric power for the smart device when it has low electric power. However, the mobile power supply generally is larger in size and thus is inconvenient for the user to carry.

EP 2 911 036 A1 is prior art according to Article 54 (3) EPC and discloses a method comprising: detecting an electrical connection between a first device having a first battery and a second device having a second battery; receiving an indication of a residual power of the second battery; displaying, by the first device, a power sharing interface based on the indication of the residual power of the second battery; detecting an input to the interface specifying a threshold amount of power; transmitting power from the first battery to the second device until the threshold amount of power is transmitted.

US 2007/0236975 A1 discloses a peer-to-peer charging system, as well as a method which comprises the steps of determining values of one or more parameters of a first energy reservoir in a first device and corresponding parameters of a second energy reservoir in a second device, and setting a direction for transferring energy between the first energy reservoir and the second energy reservoir. The direction may be set based on the voltage of the first energy reservoir and the voltage of the second energy reservoir, based on an input from a user, or based on the values of one or more parameters of the first energy reservoir and the second energy reservoir obtained in a device-to-device communication between the first device and the second device. A bi-directional charging interface for executing the method comprises two energy paths in opposite directions and a control unit for setting the direction for the energy transfer.

### SUMMARY

Accordingly, the present invention provides a charging method and an apparatus, in accordance with claims which follow.

Embodiments of the present disclosure provide a charging method and apparatus, and the technical solution is as below.

According to a first aspect of the embodiments of the present disclosure, a charging method is provided, which is applicable in a master device whose multifunctional I/O (Input/Output) interface is connected to a multifunctional I/O interface of a slave device by means of a connecting line, and the method includes:
receiving a setting signal, and determining a charging direction according to the setting signal;
determining that a charging operation comprises the slave device being charged by the master device when the charging direction is a first charging direction;
determining that the charging operation comprises the master device being charged by the slave device when the charging direction is a second charging direction; and
sending a corresponding charging instruction to a power management chip of the master device and to a power management chip of the slave device according to the charging operation; wherein receiving a setting signal, and determining a charging direction according to the setting signal comprises: displaying initial electric power information by means of an electric power control progress bar, wherein the initial electric power information comprises a percentage of total remaining electric power that is master device initial remaining electric power and the percentage of total remaining electric power that is slave device initial remaining electric power, and the total remaining electric power is equal to the sum of the master device initial remaining electric power and the slave device initial remaining electric power; receiving a sliding operation on the electric power control progress bar; determining target electric power information according to the sliding operation, wherein the target electric power information comprises a percentage of master device target remaining electric power accounting for the total remaining electric power and the percentage of slave device target remaining electric power accounting for the total remaining electric power; and determining the charging direction according to the initial electric power information and the target electric power information.

According to a second aspect of the embodiments of the present disclosure, a charging apparatus is provided, which is applicable in a master device whose multifunctional I/O interface is connected to a multifunctional I/O interface of a slave device by means of a connecting line, and the apparatus includes:
a receiving module, configured to receive a setting signal, and determine a charging direction according to the setting signal;
a first determining module, configured to determine the charging operation comprising the slave device being charged by the master device when the charging direction is a first charging direction;
a second determining module, configured to determine that the charging operation comprises the master device being charged by the slave device when the charging direction is a second charging direction; and
a first sending module, configured to send a corresponding charging instruction to a power management chip of the master device and to a power management chip of the slave device according to the charging operation; wherein the receiving module comprises: a display submodule, configured to display initial electric power information by means of an electric power control progress bar, wherein the initial electric power information comprises a percentage of total remaining electric power that is master device initial remaining electric power and the percentage of total remaining electric power that is slave device initial remaining electric power accounting for the total remaining electric power, and the total remaining electric power is equal to the sum of the master device initial remaining electric power and the slave device initial remaining electric power;an operation receiving submodule, configured to receive a sliding operation on the electric power control progress bar;a first determining submodule, configured to determine target electric power information according to the sliding operation, wherein the target electric power information comprises a percentage of master device target remaining electric power accounting for the total remaining electric power and the percentage of slave device target remaining electric power accounting for the total remaining electric power; and a second determining submodule, configured to determine the charging direction according to the initial electric power information and the target electric power information.

According to a third aspect of the embodiment of the present disclosure, there is provided a computer program which, when being executed on a processor of an apparatus, performs the above method.

The technical solution provided by the embodiments of the present disclosure may have the following beneficial effects:

A corresponding charging instruction is sent to the power management chip of the master device and to the power management chip of the slave device according to a defined charging direction by means of the master device, thereby implementing the objective of charging the slave device or charging the master device by the slave device, solving the problem that a smart device is charged by a mobile power supply which is large in size and thus is inconvenient for a user to carry, and achieving the effect that two smart devices connected by means of a connecting line may be charged by each other according to a user-defined charging direction.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a schematic structural diagram of an implementation environment involved in a charging method according to embodiments of the present disclosure;
FIG. 2A is a method flowchart of the charging method shown according to an exemplary embodiment;
FIG. 2B is a method flowchart of a charging direction setting process involved in the charging method shown according to an exemplary embodiment;
Fig. 2C is a method flowchart of an electric power control progress bar updating process involved in the charging method shown according to another exemplary embodiment;
FIG. 3 is a method flowchart of the charging method shown according to another exemplary embodiment;
FIG. 4A is a method flowchart of the charging method shown according to a further exemplary embodiment;
FIG. 4B is a method flowchart of an electric power control progress bar display process involved in the charging method shown according to a further exemplary embodiment;
FIG. 4C and FIG. 4D are schematic diagrams in implementing the charging method as shown in FIG. 4A;
FIG. 5 is a structural block diagram of a charging apparatus shown according to an exemplary embodiment;
FIG. 6 is a structural block diagram of a charging apparatus shown according to another exemplary embodiment;
FIG. 7 is a structural block diagram of a charging apparatus shown according to a further exemplary embodiment; and
FIG. 8 is a block diagram of a charging apparatus shown according to an exemplary embodiment.

Specific embodiments of the present disclosure are shown by the above drawings, and more detailed description will be made hereinafter. These drawings and text description are not for limiting the scope of conceiving the present disclosure in any way, but for illustrating the concept of the present disclosure for those skilled in the art by referring to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

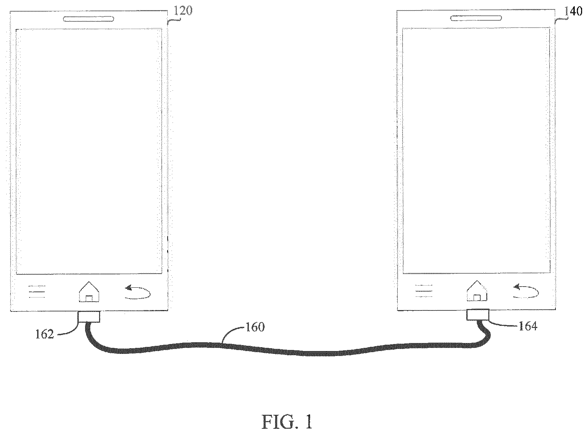

Referring to FIG. 1, which is a schematic structural diagram of an implementation environment involved in a charging method according to embodiments of the present disclosure. The implementation environment includes a master device 120, a slave device 140 and a connecting line 160.

The master device 120 and the slave device 140 are electronic devices having multifunctional I/O interfaces. The electronic device may be a smart mobile phone, a tablet computer, an ebook reader, a MP3 (Moving Picture Experts Group Audio Layer III) player, a MP4 (Moving Picture Experts Group Audio Layer IV) player or a laptop computer and the like. Generally, the multifunctional I/O interface of the master device 120 is the same as that of the slave device 140, and the multifunctional I/O interface can implement switchover between the master device and the slave device. For example, the multifunctional I/O interface may be a Type C interface.

The master device 120 is connected with the slave device 140 by means of the connecting line 160. A connector 162 and a connector 164 of the connecting line 160 are respectively matched with the multifunctional I/O interfaces of the master device 120 and the slave device 140. For example, when the multifunctional I/O interfaces of the master device 120 and the slave device 140 are Type C interfaces, the connecting line 160 is a Type C connecting line, and the connector 162 and the connector 164 of the Type C connecting line are Type C connectors.

For ease of description, in the following embodiment, it is described by taking an example in which the master device 120 and the slave device 140 are smart mobile phones, the multifunctional I/O interfaces of the master device 120 and the slave device 140 are Type C interface, and the connecting line 160 is a Type C connecting line, which does not limit the present disclosure.

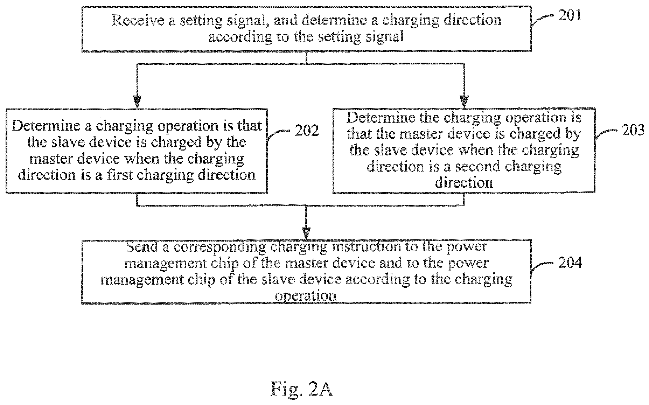

FIG. 2A is a method flowchart of the charging method shown according to an exemplary embodiment. This embodiment is described by taking an example in which the charging method is used in the master device 120 in the implementation environment as shown in FIG. 1, and the method includes the following steps.

In Step 201, a setting signal is received, and a charging direction is determined according to the setting signal.

In Step 202, it is determined that a charging operation comprises the slave device being charged by the master device when the charging direction is a first charging direction.

In Step 203, it is determined that the charging operation comprises the master devicebeing charged by the slave device when the charging direction is a second charging direction.

In Step 204, a corresponding charging instruction is sent to the power management chip of the master device and to the power management chip of the slave device according to the charging operation.

In conclusion, in the charging method provided by this embodiment, a corresponding charging instruction is sent to the power management chip of the master device and to the power management chip of the slave device according to a defined charging direction by means of the master device, thereby implementing the objective of charging the slave device or charging the master device by the slave device, solving the problem that a smart device is charged by a mobile power supply which is large in size and thus is inconvenient for a user to carry, and achieving the effect that two smart devices connected by means of a connecting line may be charged by each other according to a user-defined charging direction.

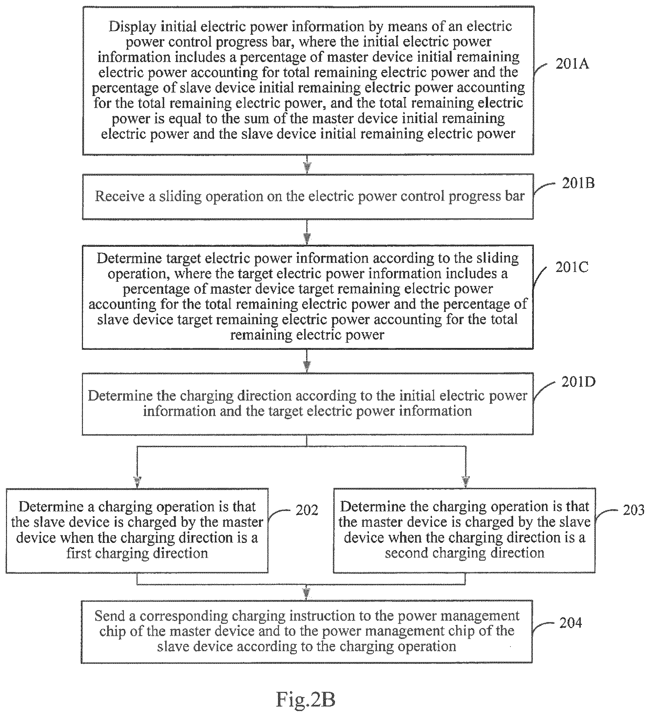

In order that the user can more intuitively learn about the remaining electric power of the master device and that of the slave device and set a charging direction according to the remaining electric power, the master device may display the remaining electric power of the master device and that of the slave device in the form of a progress bar, and receive, by means of the progress bar, the user-defined target remaining electric power. As a possible implementation manner, as shown in FIG. 2B, the foregoing Step 201 may include the following substeps.

In Substep 201A, initial electric power information is displayed by means of an electric power control progress bar. The initial electric power information includes a percentage of master device initial remaining electric power accounting for total remaining electric power and the percentage of slave device initial remaining electric power accounting for the total remaining electric power, and the total remaining electric power is equal to the sum of the master device initial remaining electric power and the slave device initial remaining electric power.

In Substep 201B, a sliding operation on the electric power control progress bar is received.

In Substep 201C, target electric power information is determined according to the sliding operation. The target electric power information includes a percentage of master device target remaining electric power accounting for the total remaining electric power and the percentage of slave device target remaining electric power accounting for the total remaining electric power.

In Substep 201D, the charging direction is determined according to the initial electric power information and the target electric power information.

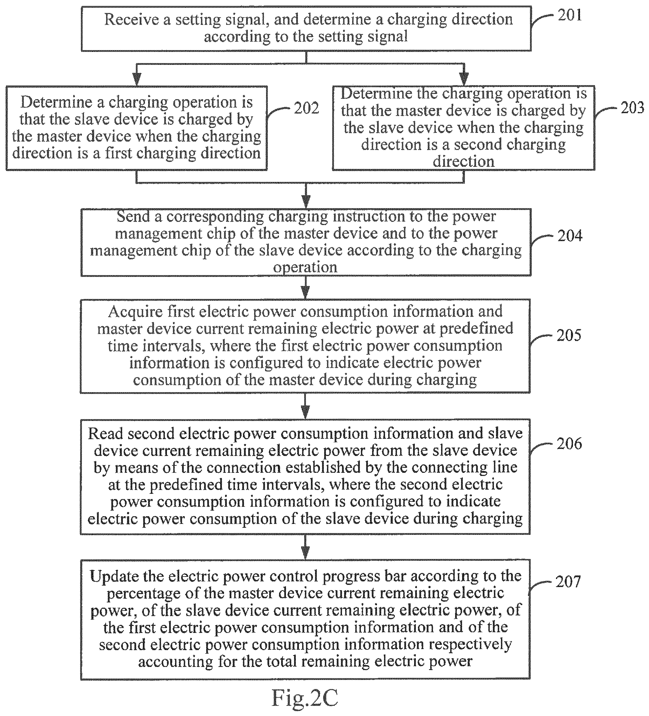

In order that the user can learn, in real time, about the charging condition between the master device and the slave device, the master device may acquire current remaining electric power of the master device and that of the slave device at predefined time intervals, and update the progress bar according to information on the current remaining electric power. As a possible implementation manner, as shown in FIG. 2C, the method may further include the following steps.

In Step 205, first electric power consumption information and master device current remaining electric power are acquired at predefined time intervals. The first electric power consumption information is configured to indicate electric power consumption of the master device during charging.

In Step 206, second electric power consumption information and slave device current remaining electric power are read from the slave device by means of the connection established by the connecting line at the predefined time intervals. The second electric power consumption information is configured to indicate electric power consumption of the slave device during charging.

In Step 207, the electric power control progress bar is updated according to the percentage of the master device current remaining electric power, of the slave device current remaining electric power, of the first electric power consumption information and of the second electric power consumption information respectively accounting for the total remaining electric power.

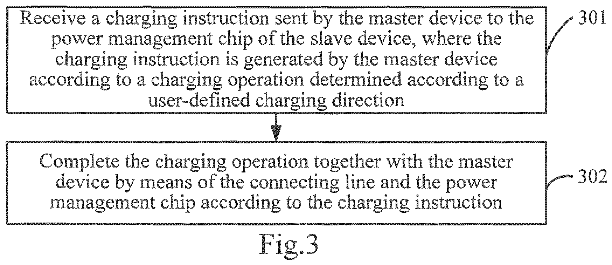

FIG. 3 is a method flowchart of the charging method shown according to another exemplary embodiment. This embodiment is described by taking an example in which the charging method is used in the slave device 140 in the implementation environment as shown in FIG. 1, and the method includes the following steps.

In Step 301, a charging instruction sent by the master device to the power management chip of the slave device is received. The charging instruction is generated by the master device according to a charging operation determined according to a user-defined charging direction.

In Step 302, the charging operation is completed together with the master device by means of the connecting line and the power management chip according to the charging instruction.

In conclusion, in the charging method provided by this embodiment, a charging instruction sent by the master device to the power management chip of the slave device is received by means of the slave device, and a charging operation between the master device and the slave device is completed according to the charging instruction, thereby solving the problem that a smart device is charged by a mobile power supply which is large in size and thus is inconvenient for a user to carry, and achieving the effect that two smart devices connected by means of a connecting line may be charged by each other according to a user-defined charging direction.

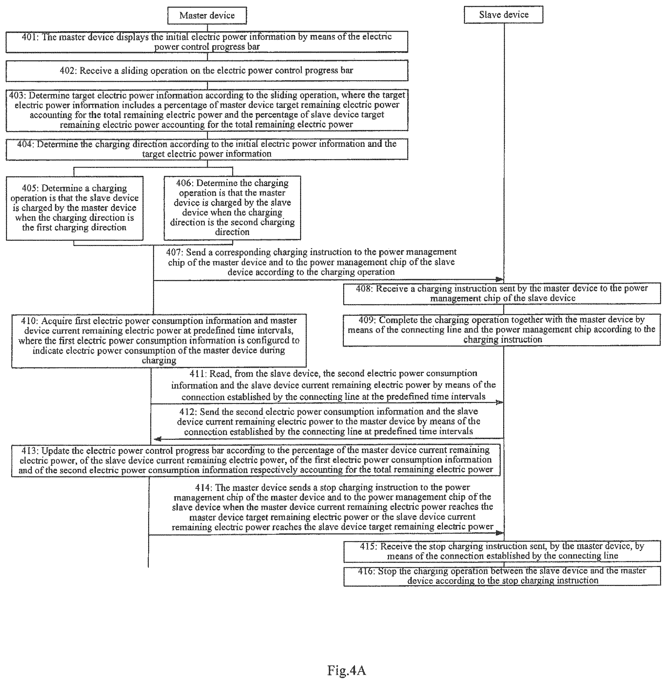

FIG. 4A is a method flowchart of the charging method shown according to a further exemplary embodiment. This embodiment is described by taking an example in which the charging method is used in the implementation environment as shown in FIG. 1, and the method includes the following steps.

In Step 401, the master device displays the initial electric power information by means of the electric power control progress bar.

After the user connects two smart devices by means of a connecting line, i.e., a data communications connection is established between the two smart devices, data transmission is available between the two smart devices by means of the connecting line. For example, the connecting line is a Type C connecting line, two ends of which are Type C connectors, and the multifunctional I/O interfaces of the two smart devices are Type C interfaces. The connection is established between the two smart devices by means of the Type C connecting line. It is to be noted that the two smart devices having Type C interfaces adopt a Type C protocol.

In the two smart devices connected by means of the Type C connecting line, one smart device is the master device, the other smart device is the slave device. The master device can read or write data in the slave device, while the slave device cannot read or write data in the master device. As a possible implementation manner, in the two smart devices, the smart device into which the Type C connecting line is inserted first is set as default master device, and correspondingly, the smart device into which the Type C connecting line is inserted later is set as default slave device. After the connection is established between the two smart devices, the master device (or the slave device) may send a master device handover request to the slave device (or the master device), the slave device (or the master device) is switched to the master device (or the slave device) according to the master device handover request, and establishes new data communications according to the current relation between the master device and the slave device. It is well known to those skilled in the art to implement a free switch between the master device and the slave device by means of the Type C protocol, which is not repeated any more herein.

In order that the user can learn about the current remaining electric power of the smart devices and set a charging direction according to the remaining electric power, the master device may display initial electric power information by means of an electric power control progress bar. The initial electric power information includes the percentage of master device initial remaining electric power accounting for total remaining electric power and the percentage of slave device initial remaining electric power accounting for the total remaining electric power, and the total remaining electric power is equal to the sum of the master device initial remaining electric power and the slave device initial remaining electric power.

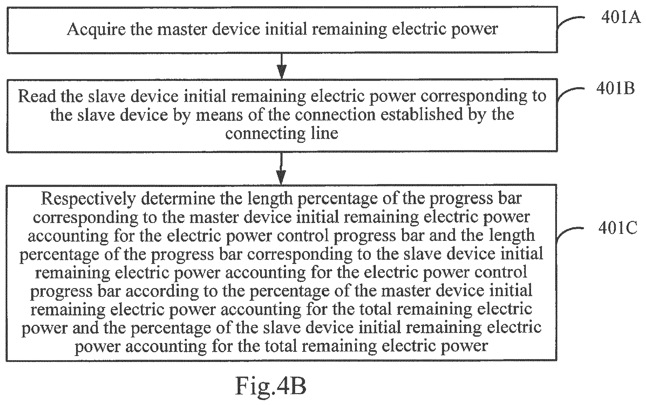

As a possible implementation manner, as shown in FIG. 4B, this step may include the following substeps.

In Substep 401A, the master device acquires the master device initial remaining electric power.

When the user uses the Type C connecting line to connect the two smart devices, the master device in the two smart devices may automatically invoke a preset application program configured to control the charging operation between the two smart devices.

After the preset application program is started, the master device may invoke a corresponding process to acquire the master device current remaining electric power and determine the master device current remaining electric power as the master device initial remaining electric power.

In Substep 401B, the master device reads the slave device initial remaining electric power corresponding to the slave device by means of the connection established by the connecting line.

The master device can read or write data from the slave device. Therefore, the master device acquires its own remaining electric power, at the same time, the master device may read the slave device current remaining electric power by means of the Type C connecting line, and determine the read current remaining electric power as the slave device initial remaining electric power.

In Substep 401C, the master device respectively determines the length percentage of the progress bar corresponding to the master device initial remaining electric power accounting for the electric power control progress bar and the length percentage of the progress bar corresponding to the slave device initial remaining electric power accounting for the electric power control progress bar according to the percentage of the master device initial remaining electric power accounting for the total remaining electric power and the percentage of the slave device initial remaining electric power accounting for the total remaining electric power.

The master device obtains the remaining electric power by calculation according to the master device initial remaining electric power and the slave device initial remaining electric power. In order that the user more intuitively learns about the size relation between the master device remaining electric power and the slave device remaining electric power, the master device further calculates the percentage of the master device initial remaining electric power accounting for the total remaining electric power and the percentage of the slave device initial remaining electric power accounting for the total remaining electric power.

Immediately after obtaining the percentage of the master device initial remaining electric power accounting for the total remaining electric power and the percentage of the slave device initial remaining electric power accounting for the total remaining electric power by calculation, the master device displays the electric power control progress bar on the screen. In one embodiment, the length percentage of the progress bar corresponding to the master device initial remaining electric power accounting for the electric power control progress bar is the percentage of the master device initial remaining electric power accounting for the total remaining electric power, and the length percentage of the progress bar corresponding to the slave device initial remaining electric power accounting for the electric power control progress bar is the percentage of the slave device initial remaining electric power accounting for the total remaining electric power. It is to be noted that the progress bar corresponding to the master device initial remaining electric power and the progress bar corresponding to the slave device initial remaining electric power are marked by using different background colors so that the user may easily distinguish.

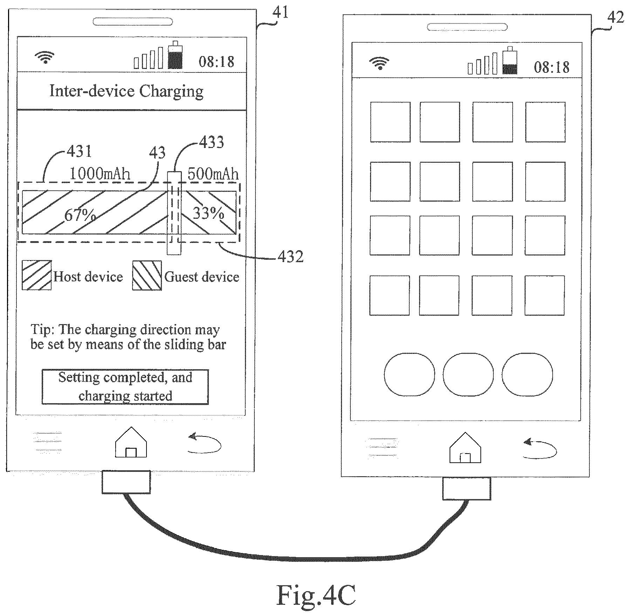

For example, as shown in FIG. 4C, when the master device initial remaining electric power acquired by the master device 41 is 1,000mA and the slave device initial remaining electric power read from the slave device 42 by means of the connecting line is 500mA, by calculation it is acquired that the percentage of the master device initial remaining electric power accounting for the total remaining electric power is 67% and the percentage of the slave device initial remaining electric power accounting for the total remaining electric power is 33%. The master device 41 displays the electric power control progress bar 43 according to the percentage acquired by calculation, where the length percentage of the progress bar 431 corresponding to the master device initial remaining electric power accounting for the electric power control progress bar 43 is 67%, and the length percentage of the progress bar 432 corresponding to the slave device initial remaining electric power accounting for the electric power control progress bar 43 is 33%.

In Step 402, the master device receives a sliding operation on the electric power control progress bar.

After the master device displays the electric power control progress bar, the user-defined target electric power information is determined by means of the user's sliding operation on the electric power control progress bar. The sliding operation may refer to dragging a sliding bar on the electric power control progress bar. It is to be noted that while the master device receives the sliding operation on the electric power control progress bar, it is necessary to update numerical information displayed on the electric power control progress bar according to a real-time position of the sliding bar.

For example, as shown in FIG. 4C, the master device 41 receives the user's sliding operation by means of the sliding bar 433 on the electric power control progress bar 43, and updates, according to the sliding operation, percentage values displayed in the progress bar 431 and the progress bar 432.

In Step 403, the master device determines target electric power information according to the sliding operation. The target electric power information includes a percentage of master device target remaining electric power accounting for the total remaining electric power and the percentage of slave device target remaining electric power accounting for the total remaining electric power.

The master device determines, according to the sliding operation, the percentage of the user-defined master device target remaining electric power accounting for the total remaining electric power and the percentage of the slave device target remaining electric power accounting for the total remaining electric power.

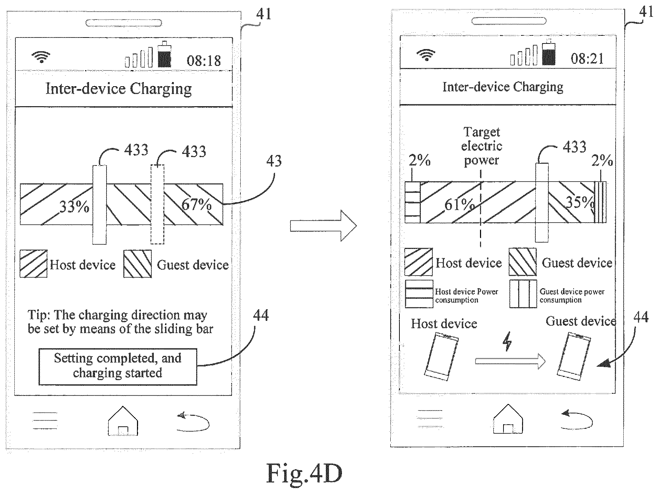

For example, as shown in FIG. 4D, the sliding bar 433 is dragged to the illustrated position, when the user clicks an "OK" button 44, the master device 41 determines, according to the current position of the sliding bar 433 on the electric power control progress bar 43, that the percentage of the user-defined master device target remaining electric power accounting for the total remaining electric power is 33% and that the percentage of the slave device target remaining electric power accounting for the total remaining electric power is 67%.

In Step 404, the master device determines the charging direction according to the initial electric power information and the target electric power information.

Because the slave device may be charged by the master device and vice versa, the master device needs to further determine the charging direction according to the initial electric power information and the user-defined target electric power information.

As a possible implementation manner, this step may include the following substeps.

In Substep 404A, the master device determines that the charging direction is the first charging direction when the percentage of the master device target remaining electric power accounting for the total remaining electric power is smaller than the percentage of the master device initial remaining electric power accounting for the total remaining electric power, or when the percentage of the slave device target remaining electric power accounting for the total remaining electric power is greater than the percentage of the slave device initial remaining electric power accounting for the total remaining electric power.

The first charging direction indicates that the slave device is charged by the master device.

When the charging direction is the first charging direction, Step 405 is executed.

For example, as shown in FIG. 4D, the master device 41 determines that the charging direction is the first charging direction when the percentage of the master device target remaining electric power accounting for the total remaining electric power is 33%, which is smaller than the percentage (67%) of the master device initial remaining electric power accounting for the total remaining electric power.

In Substep 404B, the master device determines the charging direction is the second charging direction when the percentage of the master device target remaining electric power accounting for the total remaining electric power is greater than the percentage of the master device initial remaining electric power accounting for the total remaining electric power, or when the percentage of the slave device target remaining electric power accounting for the total remaining electric power is smaller than the percentage of the slave device initial remaining electric power accounting for the total remaining electric power.

The second charging direction indicates that the master device is charged by the slave device.

When the charging direction is the second charging direction, Step 406 is executed.

In Step 405, the master device determines a charging operation is that the slave device is charged by the master device when the charging direction is the first charging direction.

In order that the user can more intuitively learn about the defined charging direction, after determining the charging direction, the master device may also display a corresponding charging direction icon.

For example, as shown in FIG. 4D, the master device 41 displays a corresponding first charging direction icon 45 according to a user-defined charging direction.

In Step 406, the master device determines that the charging operation comprises the master device being charged by the slave device when the charging direction is the second charging direction.

Correspondingly, a corresponding second charging direction icon is displayed when the master device determines that the charging direction is the second charging direction.

In Step 407, the master device sends a corresponding charging instruction to the power management chip of the master device and to the power management chip of the slave device according to the charging operation.

The master device sends a corresponding charging instruction to the power management chip of the master device and to the power management chip of the slave device according to the charging operation.

When the charging operation indicates that the slave device is charged by the master device, the master device sends, to the power management chip of the master device, an instruction for instructing the master device to discharge, and sends, to the power management chip of the slave device by means of the Type C connecting line, an instruction for instructing the slave device to charge. When the charging operation indicates that the master device is charged by the slave device, the master device sends, to the power management chip of the master device, an instruction for instructing the master device to charge, and sends, to the power management chip of the slave device by means of the Type C connecting line, an instruction for instructing the slave device to discharge.

In Step 408, the slave device receives a charging instruction sent by the master device to the power management chip of the slave device.

Correspondingly, the slave device receives, by means of the Type C connecting line, the charging instruction sent by the master device.

In Step 409, the charging operation of the slave device is completed together with the master device by means of the connecting line and the power management chip according to the charging instruction.

When the slave device receives the charging instruction instructing itself to charge the master device, the slave device charges the master device by means of the Type C connecting line.

When the slave device receives the charging instruction instructing the master device to charge the slave device, the slave device receives, by means of the Type C connecting line, electric power resources transmitted from the master device.

In Step 410, the master device acquires first electric power consumption information and master device current remaining electric power at predefined time intervals. The first electric power consumption information is configured to indicate electric power consumption of the master device during charging.

In order that the user can learn about the charging process, the master device acquires the master device current remaining electric power at predefined time intervals which may be 10 seconds.

In addition, in the charging process between the master device and the slave device, due to reasons such as program running and user operating or the like, power is constantly consumed. In order that the user learns about the device power consumption, the master device not only acquires the master device current remaining electric power, but also simultaneously acquires the first electric power consumption information configured to indicate electric power consumption of the master device during charging.

In Step 411, the master device reads, from the slave device, the second electric power consumption information and the slave device current remaining electric power by means of the connection established by the connecting line at the predefined time intervals.

Correspondingly, when the master device acquires the first electric power consumption information and the master device current remaining electric power, at the same time the master device also needs to read the second electric power consumption information on the slave device and the slave device current remaining electric power by means of the Type C connecting line. The second electric power consumption information is configured to indicate electric power consumption of the slave device during charging.

In Step 412, the slave device sends the second electric power consumption information and the slave device current remaining electric power to the master device by means of the connection established by the connecting line at predefined time intervals.

Correspondingly, the slave device sends, by means of the Type C connecting line, the second electric power consumption information and the slave device current remaining electric power to the master device.

It is to be noted that the master device may initialy read the second electric power consumption information and the slave device current remaining electric power, or may receive the second electric power consumption information and the slave device current remaining electric power initialy sent by the slave device. The present disclosure is not limited in this respect.

In Step 413, the master device updates the electric power control progress bar according to the percentage of the master device current remaining electric power, of the slave device current remaining electric power, of the first electric power consumption information, and of the second electric power consumption information respectively accounting for the total remaining electric power.

The master device updates, in real time, a numerical value in the electric power control progress bar according to the acquired master device current remaining electric power, the slave device current remaining electric power, the first electric power consumption information and the second electric power consumption information.

When the master device displays the current electric power information by means of the electric power control progress bar, different colors are used to mark a progress bar corresponding to the master device current remaining electric power, a progress bar corresponding to the slave device current remaining electric power, a progress bar corresponding to the first electric power consumption information and a progress bar corresponding to the second electric power consumption information.

For example, as shown in FIG. 4D, the master device 41 uses different background colors to respectively mark the master device current remaining electric power, the slave device current remaining electric power, the first electric power consumption information and the second electric power consumption information.

It is to be noted that the master device may also display, on the electric power control progress bar according to the user-defined target electric power information, a corresponding target electric power prompt identifier configured to prompt the user-defined target electric power.

It is also to be noted that the master device may also obtain to-be-charged electric power by calculation according to the current remaining electric power and the target remaining electric power, obtain remaining charging time by calculation according to the to-be-charged electric power and the current charging rate, and display the remaining charging time so that the user may conveniently grasp the charging time.

It is to be noted that in order to ensure a charging effect, after acquiring the first electric power consumption information and the second electric power consumption information, the master device calculates a first power consumption rate corresponding to the master device and a second power consumption rate corresponding to the slave device during the charging. When the first power consumption rate or the second power consumption rate is greater than a preset power consumption threshold, the master device determines the power consumption is too fast during the charging and sends a corresponding prompt message to remind the user to reduce device use in order to ensure the charging effect, or to automatically invoke a corresponding program and clean up the preset program so as to achieve a better charging effect. The preset program may be a background running program or a less frequently used program.

In Step 414, the master device sends a stop charging instruction to the power management chip of the master device and to the power management chip of the slave device when the master device current remaining electric power reaches the master device target remaining electric power or the slave device current remaining electric power reaches the slave device target remaining electric power.

When the master device detects that the current remaining electric power reaches the target remaining electric power, the master device automatically sends a stop charging instruction to the power management chip of the master device and to the power management chip of the slave device, so that the charging operation between the master device and the slave device is instructed to stop.

In Step 415, the slave device receives the stop charging instruction sent, by the master device, by means of the connection established by the connecting line.

The stop charging instruction is sent out when the master device detects that the master device current remaining electric power reaches the master device target electric power or the slave device current remaining electric power reaches the slave device target electric power.

In Step 416, the slave device stops the charging operation between the slave device and the master device according to the stop charging instruction.

Correspondingly, the power management chip of the slave device stops the charging operation between the slave device and the master device according to the received stop charging instruction.

In conclusion, in the charging method provided by this embodiment, a corresponding charging instruction is sent to the power management chip of the master device and to the power management chip of the slave device according to a defined charging direction by means of the master device, thereby implementing the objective of charging the slave device or charging the master device by the slave device, solving the problem that a smart device is charged by a mobile power supply which is large in size and thus is inconvenient for a user to carry, and achieving the effect that two smart devices connected by means of a connecting line may be charged by each other according to a user-defined charging direction.

In this embodiment, the master device displays information on electric power of the master device and the slave device in the form of a progress bar, and receives the user-defined charging direction and charge electric power by means of the progress bar, so that the whole charging process is more intuitive and accurate.

In this embodiment, the master device may also acquire, in real time, the current remaining electric power of the master device and that of the slave device, and display, in the progress bar, power consumption of the current remaining electric power during the charging, so that the user conveniently learns about the charging process.

In this embodiment, when the current remaining electric power reaches the user-defined target electric power, the master device sends a stop charging instruction to a power control chip of the master device and a power control chip of the slave device, thereby avoiding overcharging the master device or the slave device and improving the accuracy in charging the master device or the slave device.

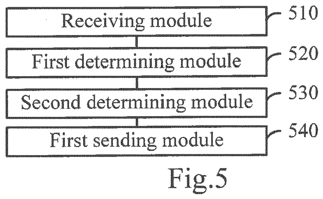

FIG. 5 is a structural block diagram of a charging apparatus shown according to an exemplary embodiment. The charging apparatus may be implemented to be the master device 120 in FIG. 1 in part or in whole by means of software or hardware or combination of both. The charging apparatus may include:
a receiving module 510, configured to receive a setting signal, and determine a charging direction according to the setting signal;
a first determining module 520, configured to determine that a charging operation comprises the slave device being charged by the master device when the charging direction is a first charging direction;
a second determining module 530, configured to determine that the charging operation comprises the master device being charged by the slave device when the charging direction is a second charging direction; and
a first sending module 540, configured to send a corresponding charging instruction to the power management chip of the master device and to the power management chip of the slave device according to the charging operation.

In conclusion, by using the charging apparatus provided by this embodiment, a corresponding charging instruction is sent to the power management chip of the master device and to the power management chip of the slave device according to a defined charging direction by means of the master device, thereby implementing the objective of charging the slave device or charging the master device by the slave device, solving the problem that a smart device is charged by a mobile power supply which is large in size and thus is inconvenient for a user to carry, and achieving the effect that two smart devices connected by means of a connecting line may be charged by each other according to a user-defined charging direction.

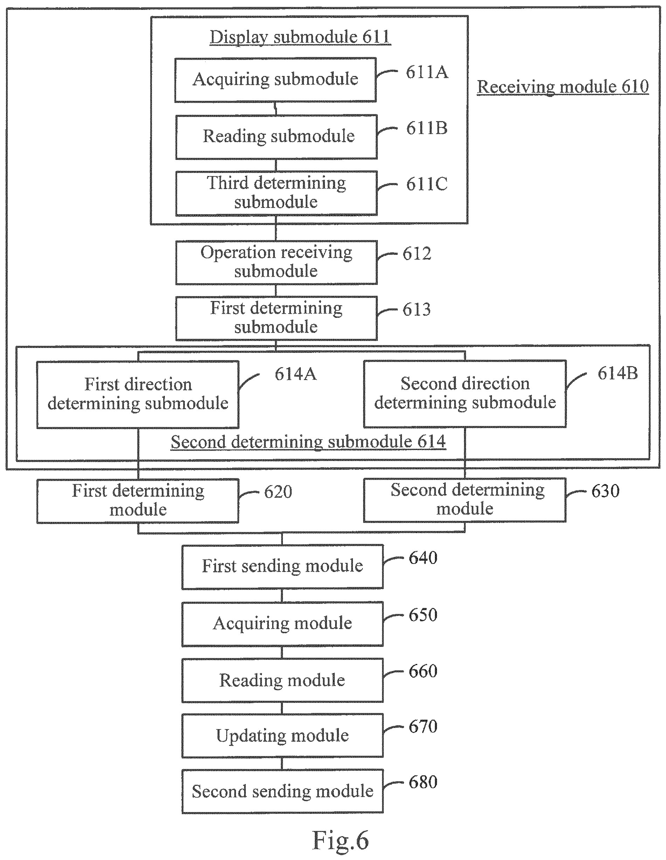

FIG. 6 is a structural block diagram of a charging apparatus shown according to another exemplary embodiment. The charging apparatus may implement to become the master device 120 in FIG. 1 in part or in whole by means of software or hardware or combination of both. The charging apparatus may include:
a receiving module 610, configured to receive a setting signal, and determine a charging direction according to the setting signal;
a first determining module 620, configured to determine a charging operation is that the slave device is charged by the master device when the charging direction is a first charging direction;
a second determining module 630, configured to determine the charging operation is that the master device is charged by the slave device when the charging direction is a second charging direction; and
a first sending module 640, configured to send a corresponding charging instruction to the power management chip of the master device and to the power management chip of the slave device according to the charging operation.

Optionally, the receiving module 610 includes:
a display submodule 611, configured to display initial electric power information by means of an electric power control progress bar, where the initial electric power information includes a percentage of master device initial remaining electric power accounting for total remaining electric power and the percentage of slave device initial remaining electric power accounting for the total remaining electric power, and the total remaining electric power is equal to the sum of the master device initial remaining electric power and the slave device initial remaining electric power;
an operation receiving submodule 612, configured to receive a sliding operation on the electric power control progress bar;
a first determining submodule 613, configured to determine target electric power information according to the sliding operation, where the target electric power information includes a percentage of master device target remaining electric power accounting for the total remaining electric power and the percentage of slave device target remaining electric power accounting for the total remaining electric power; and
a second determining submodule 614, configured to determine the charging direction according to the initial electric power information and the target electric power information.

Optionally, the second determining submodule 614 includes:
a first direction determining submodule 614A, configured to determine that the charging direction is the first charging direction when the percentage of the master device target remaining electric power accounting for the total remaining electric power is smaller than the percentage of the master device initial remaining electric power accounting for the total remaining electric power, or when the percentage of the slave device target remaining electric power accounting for the total remaining electric power is greater than the percentage of the slave device initial remaining electric power accounting for the total remaining electric power;
or,
a second direction determining submodule 614B, configured to determine that the charging direction is the second charging direction when the percentage of the master device target remaining electric power accounting for the total remaining electric power is greater than the percentage of the master device initial remaining electric power accounting for the total remaining electric power, or when the percentage of the slave device target remaining electric power accounting for the total remaining electric power is smaller than the percentage of the slave device initial remaining electric power accounting for the total remaining electric power.

Optionally, the display submodule 611 includes:
an acquiring submodule 611A, configured to acquire the master device initial remaining electric power;
a reading submodule 611B, configured to read the slave device initial remaining electric power corresponding to the slave device by means of a connection established by the connecting line; and
a third determining submodule 611C, configured to respectively determine a length percentage of a progress bar corresponding to the master device initial remaining electric power accounting for the electric power control progress bar and a length percentage of a progress bar corresponding to the slave device initial remaining electric power accounting for the electric power control progress bar according to the percentage of the master device initial remaining electric power accounting for the total remaining electric power and the percentage of the slave device initial remaining electric power accounting for the total remaining electric power.

Optionally, the apparatus further includes:
an acquiring module 650, configured to acquire first electric power consumption information and master device current remaining electric power at predefined time intervals, where the first electric power consumption information is configured to indicate electric power consumption of the master device during charging;
a reading module 660, configured to read, from the slave device, second electric power consumption information and slave device current remaining electric power by means of the connection established by the connecting line at the predefined time intervals, where the second electric power consumption information is configured to indicate electric power consumption of the slave device during charging; and
an updating module 670, configured to update the electric power control progress bar according to a percentage of the master device current remaining electric power, of the slave device current remaining electric power, of the first electric power consumption information and of the second electric power consumption information respectively accounting for the total remaining electric power.

Optionally, when the master device displays current electric power information by means of the electric power control progress bar, different colors are used to mark a progress bar corresponding to the master device current remaining electric power, a progress bar corresponding to the slave device current remaining electric power, a progress bar corresponding to the first electric power consumption information and a progress bar corresponding to the second electric power consumption information.

Optionally, the apparatus further includes:
a second sending module 680, configured to send a stop charging instruction to the power management chip of the master device and to the power management chip of the slave device when the master device current remaining electric power reaches the master device target remaining electric power or the slave device current remaining electric power reaches the slave device target remaining electric power.

Optionally, the connecting line is a Type C connecting line, two ends of which are Type C connectors, and the multifunctional I/O interfaces of the master device and that of the slave device are Type C interfaces.

In conclusion, by using the charging apparatus provided by this embodiment, a corresponding charging instruction is sent to the power management chip of the master device and to the power management chip of the slave device according to a defined charging direction by means of the master device, thereby implementing the objective of charging the slave device or charging the master device by the slave device, solving the problem that a smart device is charged by a mobile power supply which is large in size and thus is inconvenient for a user to carry, and achieving the effect that two smart devices connected by means of a connecting line may be charged by each other according to a user-defined charging direction.

In this embodiment, the master device displays information on electric power of the master device and the slave device in the form of a progress bar, and receives the user-defined charging direction and charge electric power by means of the progress bar, so that the whole charging process is more intuitive and accurate.

In this embodiment, the master device may also acquire, in real time, the current remaining electric power of the master device and that of the slave device, and display, in the progress bar, power consumption of the current remaining electric power during the charging, so that the user conveniently learns about the charging process.

In this embodiment, when the current remaining electric power reaches the user-defined target electric power, the master device sends a stop charging instruction to a power control chip of the master device and a power control chip of the slave device, thereby avoiding overcharging the master device or the slave device and improving the accuracy in charging the master device or the slave device.

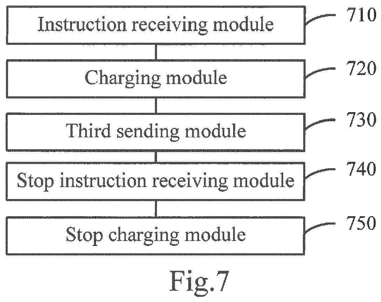

FIG. 7 is a structural block diagram of a charging apparatus shown according to a further exemplary embodiment. The charging apparatus may be implemented to be the slave device 160 in FIG. 1 in part or in whole by means of software or hardware or combination of both. The charging apparatus may include:
an instruction receiving module 710, configured to receive a charging instruction sent by the master device to the power management chip of the slave device, where the charging instruction is generated by the master device according to a charging operation determined according to a user-defined charging direction; and
a charging module 720, configured to complete the charging operation together with the master device by means of the connecting line and the power management chip according to the charging instruction.

Optionally, the apparatus further includes:
a third sending module 730, configured to send second electric power consumption information and slave device current remaining electric power to the master device by means of the connection established by the connecting line at predefined time intervals, where the second electric power consumption information is configured to indicate electric power consumption of the slave device during charging.

Optionally, the apparatus further includes:
a stop instruction receiving module 740, configured to receive a stop charging instruction sent by the master device by means of the connection established by the connecting line, where the stop charging instruction is sent out when the master device detects that master device current remaining electric power reaches master device target electric power or slave device current remaining electric power reaches slave device target electric power; and
a stop charging module 750, configured to stop the charging operation between the slave device and the master device according to the stop charging instruction.

Optionally, the connecting line is a Type C connecting line, two ends of which are Type C connectors, and the multifunctional I/O interfaces of the master device and that of the slave device are Type C interfaces.

In conclusion, by using the charging apparatus provided by this embodiment, a charging instruction sent by the master device to the power management chip of the slave device is received by means of the slave device, and a charging operation between the master device and the slave device is completed according to the charging instruction, thereby solving the problem that a smart device is charged by a mobile power supply which is large in size and thus is inconvenient for a user to carry, and achieving the effect that two smart devices connected by means of a connecting line may be charged by each other according to a user-defined charging direction.

With regard to the apparatus in the foregoing embodiments, concrete ways of executing operation by modules thereof have been described in detail in the embodiments related to the method, and thus are not elaborated herein.

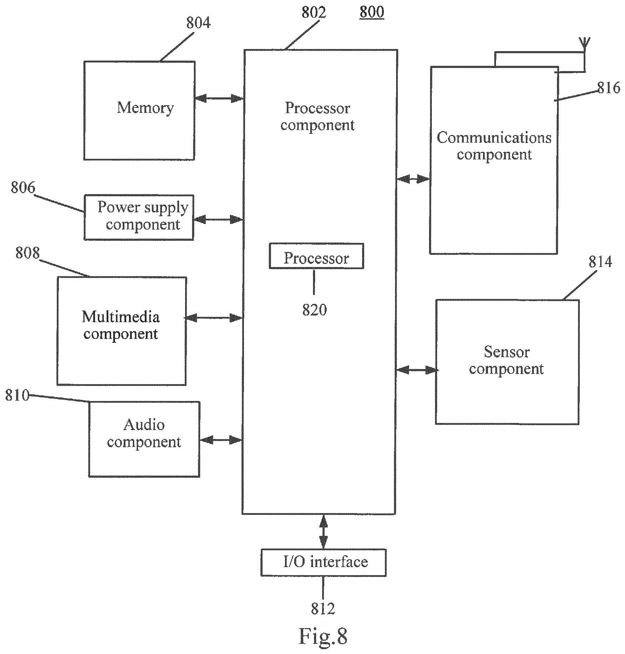

FIG. 8 is a block diagram of a charging apparatus 800 shown according to an exemplary embodiment. For example, the apparatus 800 may be a smart mobile phone, a tablet device or an e-book reader, etc.

Referring to FIG. 8, the apparatus 800 may include one or more components as below: a processor component 802, a memory 804, a power supply component 806, a multimedia component 808, an audio component 810, an input/output (I/O) interface 812, a sensor component 814 and a communications component 816.

The processor module 802 generally controls the overall operation on the apparatus 800, for example, display, telephone call, data communications, and operation associated with camera operation and record operation. The processor component 802 may include one or more processors 820 for executing instructions to complete the steps of the foregoing method in part or in whole. In addition, the processor component 802 may include one or more modules for the convenience of interaction between the processor component 802 and other components. For example, the processor component 802 may include a multimedia module for the convenience of interaction between the multimedia component 808 and the processor component 802.

The memory 804 is configured to store data of different types so as to support the operation on the apparatus 800. Examples of the data include instructions of any application program or method operated on the apparatus 800, contact data, phonebook data, a message, a picture and a video, etc. The memory 804 may be implemented by any type of volatile or non-volatile memory device or combination thereof, for example, a static random access memory (SRAM), an electrically erasable programmable read-only memory (EEPROM), an erasable programmable read only memory (EPROM), a programmable read-only memory (PROM), a read-only memory (ROM), a magnetic memory, a flash memory, a magnetic disk or an optical disk.

The power supply component 806 provides power for components of the apparatus 800. The power supply component 806 may include a power management system, one or more power supplies, and other components associated with generation, management and power distribution of the apparatus 800.

The multimedia component 808 includes a screen between the apparatus 800 and a user for providing an output interface. In some embodiments, the screen may include a liquid crystal display (LCD) and a touch panel (TP). If the screen includes the touch panel, the screen may be implemented as a touch screen for receiving an input signal from the user. The touch panel includes one or more touch sensors for sensing touching, sliding and gestures on the touch panel. The touch sensor can not only sense a boundary of a touch or slide, but also detect the time duration and pressure related to the touch or slide operation. In some embodiments, the multimedia component 808 includes a front-facing camera and/or a rear-facing camera. When the apparatus 800 is in an operation mode, for example, a shooting mode or a video mode, the front-facing camera and/or the rear-facing camera may receive external multimedia data. Each front-facing camera and rear-facing camera may be a fixed optical lens system or have a focal length and optical zoom capacity.

The audio component 810 is configured to output and/or input an audio signal. For example, the audio component 810 includes a microphone (MIC); when the apparatus 800 is in an operation mode such as a call mode, a record mode and a speech recognition mode, the microphone is configured to receive an external audio signal. The received audio signal may be further stored in the memory 804 or sent out by the communications component 816. In some embodiments, the audio component 810 further includes a loudspeaker for outputting an audio signal.

The I/O interface 812 provides an interface for the processor component 802 and a peripheral interface module, and the peripheral interface module may be a keyboard, a click wheel or buttons, etc. These buttons may include but are not limited to: a home button, a volume button, a start button and a lock button. For example, the I/O interface 812 also may be a Type C interface.

The sensor component 814 includes one or more sensors for providing the apparatus 800 with state evaluation from all aspects. For example, the sensor component 814 may detect the on/off state of the apparatus 800, relative positioning of components, for example, the components are the displayer and keypads of the apparatus 800; the sensor component 814 also may detect the position change of the apparatus 800 or a component thereof, the presence or absence of users' touch on the apparatus 800, the direction or acceleration/deceleration of the apparatus 800, and temperature variation of the apparatus 800. The sensor component 814 may include a proximity detector, which is configured to detect the presence of a nearby object in case of no physical contact. The sensor component 814 may also include an optical sensor, for example, a CMO or CCD image sensor, used in the application of imaging. In some embodiments, the sensor component 814 may also include an acceleration sensor, a gyro sensor, a magnetic sensor, a pressure sensor, or a temperature sensor.

The communications component 816 is configured to facilitate wired communications or wireless communications between the apparatus 800 and other devices. The apparatus 800 is available for access to a wireless network based on communications standards, for example, WiFi, 2G or 3G, or a combination thereof. In an exemplary embodiment, the communications component 816 receives, by means of a broadcast channel, a broadcast signal or broadcast-related information from an external broadcast management system. In an exemplary embodiment, the communications component 816 also includes a near field communication (NFC) module to promote short-range communications. For example, the NFC module may be implemented on the basis of Radio Frequency Identification (RFID) Technology, Infrared Data Association (IrDA) Technology, Ultra-wide Bandwidth (UWB) Technology, Bluetooth (BT) Technology and other technologies.

In an exemplary embodiment, the apparatus 800 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronic components to execute the foregoing method.

In an exemplary embodiment, a non-transitory computer-readable storage medium including an instruction is also provided, for example, a memory 804 including the instruction, the foregoing instruction may be executed by the processor 820 of the apparatus 800 to achieve the foregoing method. For example, the non-transitory computer-readable storage medium may be a ROM, a random access memory (RAM), a CD-ROM, a magnetic tape, a floppy disk and an optical data memory device, etc.

In a non-transitory computer-readable storage medium, an instruction in the storage medium is executed by the processor of the apparatus 800 so that the apparatus 800 can execute the foregoing charging method of the master device side or the slave device side.

## Claims

1. A charging method, applicable in a master device (120) whose multifunctional input/output I/O interface is connected to a multifunctional I/O interface of a slave device (140) by means of a connecting line (160), comprising:
receiving (201) a setting signal, and determining a charging direction according to the setting signal;
determining (202) that a charging operation comprises the slave device being charged by the master device when the charging direction is a first charging direction;
determining (203) that the charging operation comprises the master device is charged by the slave device when the charging direction is a second charging direction; and
sending (204) a corresponding charging instruction to a power management chip of the master device and to a power management chip of the slave device according to the charging operation;
**characterized in that** receiving a setting signal, and determining a charging direction according to the setting signal comprises:
displaying (201A) initial electric power information by means of an electric power control progress bar (43), wherein the initial electric power information comprises a percentage of total remaining electric power that is master device initial remaining electric power and the percentage of total remaining electric power that is slave device initial remaining electric power, and the total remaining electric power is equal to the sum of the master device initial remaining electric power and the slave device initial remaining electric power;
receiving (201B) a sliding operation on the electric power control progress bar;
determining (201C) target electric power information according to the sliding operation, wherein the target electric power information comprises a percentage of master device target remaining electric power accounting for the total remaining electric power and the percentage of slave device target remaining electric power accounting for the total remaining electric power; and
determining (201D) the charging direction according to the initial electric power information and the target electric power information.

2. The method of claim 1, wherein the determining the charging direction according to the initial electric power information and the target electric power information comprises:
determining the charging direction is the first charging direction when the percentage of the master device target remaining electric power accounting for the total remaining electric power is smaller than the percentage of the master device initial remaining electric power accounting for the total remaining electric power, or when the percentage of the slave device target remaining electric power accounting for the total remaining electric power is greater than the percentage of the slave device initial remaining electric power accounting for the total remaining electric power;
or,
determining the charging direction is the second charging direction when the percentage of the master device target remaining electric power accounting for the total remaining electric power is greater than the percentage of the master device initial remaining electric power accounting for the total remaining electric power, or when the percentage of the slave device target remaining electric power accounting for the total remaining electric power is smaller than the percentage of the slave device initial remaining electric power accounting for the total remaining electric power.

3. The method of claim 1, wherein the displaying initial electric power information by means of an electric power control progress bar comprises:
acquiring (401A) the master device initial remaining electric power;
reading (401B) the slave device initial remaining electric power corresponding to the slave device by means of a connection established by the connecting line; and
respectively determining (401C) a length percentage of a progress bar corresponding to the master device initial remaining electric power accounting for the electric power control progress bar and a length percentage of a progress bar corresponding to the slave device initial remaining electric power accounting for the electric power control progress bar according to the percentage of the master device initial remaining electric power accounting for the total remaining electric power and the percentage of the slave device initial remaining electric power accounting for the total remaining electric power.

4. The method of any one of claims 1-3, further comprising:
acquiring (205, 410) first electric power consumption information and master device current remaining electric power at predefined time intervals, wherein the first electric power consumption information is configured to indicate electric power consumption of the master device during charging;
reading (206, 411), from the slave device, second electric power consumption information and slave device current remaining electric power by means of the connection established by the connecting line at the predefined time intervals, wherein the second electric power consumption information is configured to indicate electric power consumption of the slave device during charging; and
updating (207, 413) the electric power control progress bar according to a percentage of the master device current remaining electric power, of the slave device current remaining electric power, of the first electric power consumption information and of the second electric power consumption information respectively accounting for the total remaining electric power.

5. The method of claim 4, wherein when the master device displays current electric power information by means of the electric power control progress bar, different colors are used to mark a progress bar (431) corresponding to the master device current remaining electric power, a progress bar (432) corresponding to the slave device current remaining electric power, a progress bar corresponding to the first electric power consumption information and a progress bar corresponding to the second electric power consumption information.

6. The method of claim 1, further comprising:
sending (414) a stop charging instruction to the power management chip of the master device and to the power management chip of the slave device when the master device current remaining electric power reaches the master device target remaining electric power or the slave device current remaining electric power reaches the slave device target remaining electric power.

7. A charging apparatus, applicable in a master device (120) whose multifunctional input/output I/O interface is connected to a multifunctional I/O interface of a slave device (140) by means of a connecting line (160), comprising:
a receiving module (510), configured to receive a setting signal, and determine a charging direction according to the setting signal;
a first determining module (520), configured to determine a charging operation is that the slave device is charged by the master device when the charging direction is a first charging direction;
a second determining module (530), configured to determine the charging operation is that the master device is charged by the slave device when the charging direction is a second charging direction; and
a first sending module (540), configured to send a corresponding charging instruction to a power management chip of the master device and to a power management chip of the slave device according to the charging operation; **characterized in that**
the receiving module comprises:
a display submodule (611), configured to display initial electric power information by means of an electric power control progress bar, wherein the initial electric power information comprises a percentage of total remaining electric power that is master device initial remaining electric power and the percentage of total remaining electric power that is slave device initial remaining electric power accounting for the total remaining electric power, and the total remaining electric power is equal to the sum of the master device initial remaining electric power and the slave device initial remaining electric power;
an operation receiving submodule (612), configured to receive a sliding operation on the electric power control progress bar;
a first determining submodule (613), configured to determine target electric power information according to the sliding operation, wherein the target electric power information comprises a percentage of master device target remaining electric power accounting for the total remaining electric power and the percentage of slave device target remaining electric power accounting for the total remaining electric power; and
a second determining submodule (614), configured to determine the charging direction according to the initial electric power information and the target electric power information.

8. The apparatus of claim 7, wherein the second determining submodule comprises:
a first direction determining submodule (614A), configured to determine that the charging direction is the first charging direction when the percentage of the master device target remaining electric power accounting for the total remaining electric power is smaller than the percentage of the master device initial remaining electric power accounting for the total remaining electric power, or when the percentage of the slave device target remaining electric power accounting for the total remaining electric power is greater than the percentage of the slave device initial remaining electric power accounting for the total remaining electric power;
or,
a second direction determining submodule (614B), configured to determine that the charging direction is the second charging direction when the percentage of the master device target remaining electric power accounting for the total remaining electric power is greater than the percentage of the master device initial remaining electric power accounting for the total remaining electric power, or when the percentage of the slave device target remaining electric power accounting for the total remaining electric power is smaller than the percentage of the slave device initial remaining electric power accounting for the total remaining electric power.

9. The apparatus of claim 7, wherein the display submodule comprises:
an acquiring submodule (61 1A), configured to acquire the master device initial remaining electric power;
a reading submodule (611B), configured to read the slave device initial remaining electric power corresponding to the slave device by means of a connection established by the connecting line; and
a third determining submodule (611C), configured to respectively determine a length percentage of a progress bar corresponding to the master device initial remaining electric power accounting for the electric power control progress bar and a length percentage of a progress bar corresponding to the slave device initial remaining electric power accounting for the electric power control progress bar according to the percentage of the master device initial remaining electric power accounting for the total remaining electric power and the percentage of the slave device initial remaining electric power accounting for the total remaining electric power.

10. The apparatus of any one of claims 7-9, further comprising:
an acquiring module (650), configured to acquire first electric power consumption information and master device current remaining electric power at predefined time intervals, wherein the first electric power consumption information is configured to indicate electric power consumption of the master device during charging;
a reading module (660), configured to read, from the slave device, second electric power consumption information and slave device current remaining electric power by means of the connection established by the connecting line at the predefined time intervals, wherein the second electric power consumption information is configured to indicate electric power consumption of the slave device during charging; and
an updating module (670), configured to update the electric power control progress bar according to a percentage of the master device current remaining electric power, of the slave device current remaining electric power, of the first electric power consumption information and of the second electric power consumption information respectively accounting for the total remaining electric power.

11. The apparatus of claim 10, wherein when the master device displays current electric power information by means of the electric power control progress bar, different colors are used to mark a progress bar corresponding to the master device current remaining electric power, a progress bar corresponding to the slave device current remaining electric power, a progress bar corresponding to the first electric power consumption information and a progress bar corresponding to the second electric power consumption information.

12. The apparatus of claim 7, further comprising:
a second sending module (680), configured to send a stop charging instruction to the power management chip of the master device and to the power management chip of the slave device when the master device current remaining electric power reaches the master device target remaining electric power or the slave device current remaining electric power reaches the slave device target remaining electric power.

13. The method or apparatus of any preceding claim, wherein the connecting line is a Type C connecting line, two ends of which are Type C connectors, and the multifunctional I/O interfaces of the master device and that of the slave device are Type C interfaces.

14. A computer program comprising instructions which, when being executed on a processor of an apparatus, perform a method according to any one of claims 1-6.

## Patentansprüche

1. Aufladeverfahren, das in einer Master-Vorrichtung (120) anwendbar ist, deren multifunktionale Eingangs-/Ausgangs-(I/O)-Schnittstelle mit einer multifunktionalen I/O-Schnittstelle einer Slave-Vorrichtung (140) durch eine Verbindungsleitung (160) verbunden ist, umfassend:
Empfangen (201) eines Einstellungssignals und Bestimmen einer Aufladungsrichtung gemäß dem Einstellungssignal;
Bestimmen (202), dass eine Aufladeoperation umfasst, dass die Slave-Vorrichtung durch die Master-Vorrichtung aufgeladen wird, wenn die Aufladungsrichtung eine erste Aufladungsrichtung ist;
Bestimmen (203), dass die Aufladeoperation umfasst, dass die Master-Vorrichtung durch die Slave-Vorrichtung aufgeladen wird, wenn die Aufladungsrichtung eine zweite Aufladungsrichtung ist; und
Senden (204) einer entsprechenden Aufladungsanweisung an einen Leistungsmanagement-Chip der Master-Vorrichtung und an einen Leistungsmanagement-Chip der Slave-Vorrichtung gemäß der Aufladungsoperation;
**dadurch gekennzeichnet, dass**
ein Empfangen eines Einstellungssignals und ein Bestimmen einer Aufladungsrichtung gemäß dem Einstellungssignal umfasst:
Anzeigen (201A) anfänglicher elektrischer Leistungsinformationen durch einen Verlaufsbalken (43) zur elektrischen Leistungssteuerung, wobei die anfänglichen elektrischen Leistungsinformationen einen Prozentsatz einer gesamten verbleibenden elektrischen Leistung, der die anfängliche verbleibende elektrische Leistung der Master-Vorrichtung ist, und den Prozentsatz einer gesamten verbleibenden elektrischen Leistung, der die anfängliche verbleibende elektrische Leistung der Slave-Vorrichtung ist, umfassen und die gesamte verbleibende elektrische Leistung gleich der Summe der anfänglichen verbleibenden elektrischen Leistung der Master-Vorrichtung und der anfänglichen verbleibenden elektrischen Leistung der Slave-Vorrichtung ist;
Empfangen (201B) einer Verschiebeoperation an dem Verlaufsbalken zur elektrischen Leistungssteuerung;
Bestimmen (201C) von Informationen über eine elektrische Sollleistung gemäß der Verschiebeoperation, wobei die Informationen über eine elektrische Sollleistung einen Prozentsatz einer verbleibenden elektrischen Sollleistung der Master-Vorrichtung, der für die gesamte verbleibende elektrische Leistung angerechnet wird, und den Prozentsatz einer verbleibenden elektrischen Sollleistung der Slave-Vorrichtung, der für die gesamte verbleibende elektrische Leistung angerechnet wird, umfassen; und
Bestimmen (201D) der Aufladungsrichtung gemäß den anfänglichen elektrischen Leistungsinformationen und den Informationen über eine elektrische Sollleistung.

2. Verfahren nach Anspruch 1, wobei das Bestimmen der Aufladungsrichtung gemäß den anfänglichen elektrischen Leistungsinformationen und den Informationen über eine elektrische Sollleistung umfasst:
Bestimmen, dass die Aufladungsrichtung die erste Aufladungsrichtung ist, wenn der Prozentsatz der verbleibenden elektrischen Sollleistung der Master-Vorrichtung, der für die gesamte verbleibende elektrische Leistung angerechnet wird, kleiner ist als der Prozentsatz der anfänglichen verbleibenden elektrischen Leistung der Master-Vorrichtung, der für die gesamte verbleibende elektrische Leistung angerechnet wird, oder wenn der Prozentsatz der verbleibenden elektrischen Sollleistung der Slave-Vorrichtung, der für die gesamte verbleibende elektrische Leistung angerechnet wird, größer ist als der Prozentsatz der anfänglichen verbleibenden elektrischen Leistung der Slave-Vorrichtung, der für die gesamte verbleibende elektrische Leistung angerechnet wird;
oder
Bestimmen, dass die Aufladungsrichtung die zweite Aufladungsrichtung ist, wenn der Prozentsatz der verbleibenden elektrischen Sollleistung der Master-Vorrichtung, der für die gesamte verbleibende elektrische Leistung angerechnet wird, größer ist als der Prozentsatz der anfänglichen verbleibenden elektrischen Leistung der Master-Vorrichtung, der für die gesamte verbleibende elektrische Leistung angerechnet wird, oder wenn der Prozentsatz der verbleibenden elektrischen Sollleistung der Slave-Vorrichtung, der für die gesamte verbleibende elektrische Leistung angerechnet wird, kleiner ist als der Prozentsatz der anfänglichen verbleibenden elektrischen Leistung der Slave-Vorrichtung, der für die gesamte verbleibende elektrische Leistung angerechnet wird.

3. Verfahren nach Anspruch 1, wobei das Anzeigen anfänglicher elektrischer Leistungsinformationen durch einen Verlaufsbalken zur elektrischen Leistungssteuerung umfasst:
Erlangen (401A) der anfänglichen verbleibenden elektrischen Leistung der Master-Vorrichtung;
Lesen (401B) der anfänglichen verbleibenden elektrischen Leistung der Slave-Vorrichtung entsprechend der Slave-Vorrichtung durch eine Verbindung, die über die Verbindungsleitung errichtet ist; und
Bestimmen (401C) eines Längenprozentsatzes eines Verlaufsbalkens entsprechend der anfänglichen verbleibenden elektrischen Leistung der Master-Vorrichtung, der für den Verlaufsbalken zur elektrischen Leistungssteuerung angerechnet wird, beziehungsweise eines Längenprozentsatzes eines Verlaufsbalkens entsprechend der anfänglichen verbleibenden elektrischen Leistung der Slave-Vorrichtung, der für den Verlaufsbalken zur elektrischen Leistungssteuerung angerechnet wird, gemäß dem Prozentsatz der anfänglichen verbleibenden elektrischen Leistung der Master-Vorrichtung, der für die gesamte verbleibende elektrische Leistung angerechnet wird, und dem Prozentsatz der anfänglichen verbleibenden elektrischen Leistung der Slave-Vorrichtung, der für die gesamte verbleibende elektrische Leistung angerechnet wird.

4. Verfahren nach einem der Ansprüche 1-3, weiter umfassend:
Erlangen (205, 410) erster Informationen über einen elektrischen Leistungsverbrauch und einer aktuellen verbleibenden elektrischen Leistung der Master-Vorrichtung zu vordefinierten Zeitintervallen, wobei die ersten Informationen über einen elektrischen Leistungsverbrauch konfiguriert sind, einen elektrischen Leistungsverbrauch der Master-Vorrichtung während eines Aufladens anzugeben;
Lesen (206, 411) aus der Slave-Vorrichtung zweiter Informationen über einen elektrischen Leistungsverbrauch und einer aktuellen verbleibenden elektrischen Leistung der Slave-Vorrichtung mittels der Verbindung, die durch die Verbindungsleitung errichtet ist, zu vordefinierten Zeitintervallen, wobei die zweiten Informationen über einen elektrischen Leistungsverbrauch konfiguriert sind, einen elektrischen Leistungsverbrauch der Slave-Vorrichtung während eines Aufladens anzugeben; und
Aktualisieren (207, 413) des Verlaufsbalkens zur elektrischen Leistungssteuerung gemäß einem Prozentsatz der aktuellen verbleibenden elektrischen Leistung der Master-Vorrichtung, der aktuellen verbleibenden elektrischen Leistung der Slave-Vorrichtung, der ersten Informationen über einen elektrischen Leistungsverbrauch und der zweiten Informationen über einen elektrischen Leistungsverbrauch, die jeweils für die gesamte verbleibende elektrische Leistung angerechnet werden.

5. Verfahren nach Anspruch 4, wobei, wenn die Master-Vorrichtung aktuelle elektrische Leistungsinformationen durch den Verlaufsbalken zur elektrischen Leistungssteuerung anzeigt, verschiedene Farben zum Markieren eines Verlaufsbalkens (431), der der aktuellen verbleibenden elektrischen Leistung der Master-Vorrichtung entspricht, eines Verlaufsbalkens (432), der der aktuellen verbleibenden elektrischen Leistung der Slave-Vorrichtung entspricht, eines Verlaufsbalkens, der den ersten Informationen über einen elektrischen Leistungsverbrauch entspricht, und eines Verlaufsbalkens, der den zweiten Informationen über einen elektrischen Leistungsverbrauch entspricht, verwendet werden.

6. Verfahren nach Anspruch 1, weiter umfassend:
Senden (414) einer Aufladungsstoppanweisung an den Leistungsmanagement-Chip der Master-Vorrichtung und an den Leistungsmanagement-Chip der Slave-Vorrichtung, wenn die aktuelle verbleibende elektrische Leistung der Master-Vorrichtung die verbleibende elektrische Sollleistung der Master-Vorrichtung erreicht, oder die aktuelle verbleibende elektrische Leistung der Slave-Vorrichtung die verbleibende elektrische Sollleistung der Slave-Vorrichtung erreicht.

7. Aufladevorrichtung, die in einer Master-Vorrichtung (120) anwendbar ist, deren multifunktionale Eingangs-/Ausgangs-(I/O)-Schnittstelle mit einer multifunktionalen I/O-Schnittstelle einer Slave-Vorrichtung (140) durch eine Verbindungsleitung (160) verbunden ist, umfassend:
ein Empfangsmodul (510), das konfiguriert ist zum Empfangen eines Einstellungssignals und Bestimmen einer Aufladungsrichtung gemäß dem Einstellungssignal;
ein erstes Bestimmungsmodul (520), das konfiguriert ist zum Bestimmen, dass eine Aufladeoperation ist, dass die Slave-Vorrichtung durch die Master-Vorrichtung aufgeladen wird, wenn die Aufladungsrichtung eine erste Aufladungsrichtung ist;
ein zweites Bestimmungsmodul (530), das konfiguriert ist zum Bestimmen, dass eine Aufladeoperation ist, dass die Master-Vorrichtung durch die Slave-Vorrichtung aufgeladen wird, wenn die Aufladungsrichtung eine zweite Aufladungsrichtung ist; und
ein erstes Sendemodul (540), das konfiguriert ist zum Senden einer entsprechenden Aufladungsanweisung an einen Leistungsmanagement-Chip der Master-Vorrichtung und an einen Leistungsmanagement-Chip der Slave-Vorrichtung gemäß der Aufladungsoperation;
**dadurch gekennzeichnet, dass**
das Empfangsmodul umfasst:
ein Anzeige-Teilmodul (611), das konfiguriert ist zum Anzeigen anfänglicher elektrischer Leistungsinformationen durch einen Verlaufsbalken zur elektrischen Leistungssteuerung, wobei die anfänglichen elektrischen Leistungsinformationen einen Prozentsatz einer gesamten verbleibenden elektrischen Leistung, der die anfängliche verbleibende elektrische Leistung der Master-Vorrichtung ist, und den Prozentsatz einer gesamten verbleibenden elektrischen Leistung, der die anfängliche verbleibende elektrische Leistung der Slave-Vorrichtung ist, umfassen, die für die gesamte verbleibende elektrische Leistung angerechnet werden, und die gesamte verbleibende elektrische Leistung gleich der Summe der anfänglichen verbleibenden elektrischen Leistung der Master-Vorrichtung und der anfänglichen verbleibenden elektrischen Leistung der Slave-Vorrichtung ist;
ein Betriebsempfangs-Teilmodul (612), das konfiguriert ist zum Empfangen einer Verschiebeoperation an dem Verlaufsbalken zur elektrischen Leistungssteuerung;
ein erstes Bestimmungs-Teilmodul (613), das konfiguriert ist zum Bestimmen von Informationen über eine elektrische Sollleistung gemäß der Verschiebeoperation, wobei die Informationen über eine elektrische Sollleistung einen Prozentsatz einer verbleibenden elektrischen Sollleistung der Master-Vorrichtung, der für die gesamte verbleibende elektrische Leistung angerechnet wird, und den Prozentsatz einer verbleibenden elektrischen Sollleistung der Slave-Vorrichtung, der für die gesamte verbleibende elektrische Leistung angerechnet wird, umfassen; und
ein zweites Bestimmungs-Teilmodul (614), das konfiguriert ist zum Bestimmen der Aufladungsrichtung gemäß den anfänglichen elektrischen Leistungsinformationen und den Informationen über eine elektrische Sollleistung.

8. Verfahren nach Anspruch 7, wobei das zweite Bestimmungs-Teilmodul umfasst:
ein Teilmodul (614A) zum Bestimmen einer ersten Richtung, das konfiguriert ist zum Bestimmen, dass die Aufladungsrichtung die erste Aufladungsrichtung ist, wenn der Prozentsatz der verbleibenden elektrischen Sollleistung der Master-Vorrichtung, der für die gesamte verbleibende elektrische Leistung angerechnet wird, kleiner ist als der Prozentsatz der anfänglichen verbleibenden elektrischen Leistung der Master-Vorrichtung, der für die gesamte verbleibende elektrische Leistung angerechnet wird, oder wenn der Prozentsatz der verbleibenden elektrischen Sollleistung der Slave-Vorrichtung, der für die gesamte verbleibende elektrische Leistung angerechnet wird, größer ist als der Prozentsatz der anfänglichen verbleibenden elektrischen Leistung der Slave-Vorrichtung, der für die gesamte verbleibende elektrische Leistung angerechnet wird;
oder
ein Teilmodul (614B) zum Bestimmen einer zweiten Richtung, das konfiguriert ist zum Bestimmen, dass die Aufladungsrichtung die zweite Aufladungsrichtung ist, wenn der Prozentsatz der verbleibenden elektrischen Sollleistung der Master-Vorrichtung, der für die gesamte verbleibende elektrische Leistung angerechnet wird, größer ist als der Prozentsatz der anfänglichen verbleibenden elektrischen Leistung der Master-Vorrichtung, der für die gesamte verbleibende elektrische Leistung angerechnet wird, oder wenn der Prozentsatz der verbleibenden elektrischen Sollleistung der Slave-Vorrichtung, der für die gesamte verbleibende elektrische Leistung angerechnet wird, kleiner ist als der Prozentsatz der anfänglichen verbleibenden elektrischen Leistung der Slave-Vorrichtung, der für die gesamte verbleibende elektrische Leistung angerechnet wird.

9. Vorrichtung nach Anspruch 7, wobei das Anzeige-Teilmodul umfasst:
ein Erlangungs-Teilmodul (611A), das konfiguriert zum Erlangen der anfänglichen verbleibenden elektrischen Leistung der Master-Vorrichtung;
ein Lese-Teilmodul (611B), das konfiguriert ist zum Lesen der anfänglichen verbleibenden elektrischen Leistung der Slave-Vorrichtung entsprechend der Slave-Vorrichtung durch eine Verbindung, die über die Verbindungsleitung errichtet ist; und
ein drittes Bestimmungs-Teilmodul (611C), das konfiguriert ist zum Bestimmen eines Längenprozentsatzes eines Verlaufsbalkens entsprechend der anfänglichen verbleibenden elektrischen Leistung der Master-Vorrichtung, der für den Verlaufsbalken zur elektrischen Leistungssteuerung angerechnet wird, beziehungsweise eines Längenprozentsatzes eines Verlaufsbalkens entsprechend der anfänglichen verbleibenden elektrischen Leistung der Slave-Vorrichtung, der für den Verlaufsbalken zur elektrischen Leistungssteuerung angerechnet wird, gemäß dem Prozentsatz der anfänglichen verbleibenden elektrischen Leistung der Master-Vorrichtung, der für die gesamte verbleibende elektrische Leistung angerechnet wird, und dem Prozentsatz der anfänglichen verbleibenden elektrischen Leistung der Slave-Vorrichtung, der für die gesamte verbleibende elektrische Leistung angerechnet wird.

10. Vorrichtung nach einem der Ansprüche 7-9, weiter umfassend:
ein Erlangungsmodul (650), das konfiguriert ist zum Erlangen erster Informationen über einen elektrischen Leistungsverbrauch und einer aktuellen verbleibenden elektrischen Leistung der Master-Vorrichtung zu vordefinierten Zeitintervallen, wobei die ersten Informationen über einen elektrischen Leistungsverbrauch konfiguriert sind, einen elektrischen Leistungsverbrauch der Master-Vorrichtung während eines Aufladens anzugeben;
ein Lesemodul (660), das konfiguriert ist zum Lesen aus der Slave-Vorrichtung zweiter Informationen über einen elektrischen Leistungsverbrauch und einer aktuellen verbleibenden elektrischen Leistung der Slave-Vorrichtung mittels der Verbindung, die durch die Verbindungsleitung errichtet ist, zu vordefinierten Zeitintervallen, wobei die zweiten Informationen über einen elektrischen Leistungsverbrauch konfiguriert sind, einen elektrischen Leistungsverbrauch der Slave-Vorrichtung während eines Aufladens anzugeben; und
ein Aktualisierungsmodul (670), das konfiguriert ist zum Aktualisieren des Verlaufsbalkens zur elektrischen Leistungssteuerung gemäß einem Prozentsatz der aktuellen verbleibenden elektrischen Leistung der Master-Vorrichtung, der aktuellen verbleibenden elektrischen Leistung der Slave-Vorrichtung, der ersten Informationen über einen elektrischen Leistungsverbrauch und der zweiten Informationen über einen elektrischen Leistungsverbrauch, die jeweils für die gesamte verbleibende elektrische Leistung angerechnet werden.

11. Vorrichtung nach Anspruch 10, wobei, wenn die Master-Vorrichtung aktuelle elektrische Leistungsinformationen durch den Verlaufsbalken zur elektrischen Leistungssteuerung anzeigt, verschiedene Farben zum Markieren eines Verlaufsbalkens, der der aktuellen verbleibenden elektrischen Leistung der Master-Vorrichtung entspricht, eines Verlaufsbalkens, der der aktuellen verbleibenden elektrischen Leistung der Slave-Vorrichtung entspricht, eines Verlaufsbalkens, der den ersten Informationen über einen elektrischen Leistungsverbrauch entspricht, und eines Verlaufsbalkens, der den zweiten Informationen über einen elektrischen Leistungsverbrauch entspricht, verwendet werden.

12. Vorrichtung nach Anspruch 7, weiter umfassend:
ein zweites Sendemodul (680), das konfiguriert ist zum Senden einer Aufladungsstoppanweisung an den Leistungsmanagement-Chip der Master-Vorrichtung und an den Leistungsmanagement-Chip der Slave-Vorrichtung, wenn die aktuelle verbleibende elektrische Leistung der Master-Vorrichtung die verbleibende elektrische Sollleistung der Master-Vorrichtung erreicht, oder die aktuelle verbleibende elektrische Leistung der Slave-Vorrichtung die verbleibende elektrische Sollleistung der Slave-Vorrichtung erreicht.

13. Verfahren oder Vorrichtung nach einem der vorstehenden Ansprüche, wobei die Verbindungsleitung eine Verbindungsleitung vom Typ C ist, von welcher zwei Enden Verbindungsstücke vom Typ C sind, und die multifunktionalen I/O-Schnittstellen der Master-Vorrichtung und jene der Slave-Vorrichtung Schnittstellen vom Typ C sind.

14. Rechnerprogramm, umfassend Anweisungen, die, wenn sie auf einem Prozessor einer Vorrichtung ausgeführt werden, ein Verfahren nach einem der Ansprüche 1-6 durchführen.

## Revendications

1. Procédé de charge, applicable dans un dispositif maître (120) dont une interface d'entrée/sortie E/S multifonctionnelle est reliée à une interface d'E/S multifonctionnelle d'un dispositif esclave (140) au moyen d'une ligne de connexion (160), comprenant :
la réception (201) d'un signal de réglage et la détermination d'un sens de charge selon le signal de réglage ;
la détermination (202) qu'une opération de charge comprend le fait que le dispositif esclave est chargé par le dispositif maître quand le sens de charge est un premier sens de charge ;
la détermination (203) que l'opération de charge comprend le fait que le dispositif maître est chargé par le dispositif esclave quand le sens de charge est un second sens de charge ; et
l'envoi (204) d'une instruction de charge correspondante à une puce de gestion d'énergie du dispositif maître et à une puce de gestion d'énergie du dispositif esclave selon l'opération de charge ;
**caractérisé en ce que**
la réception d'un signal de réglage et la détermination d'un sens de charge selon le signal de réglage comprennent :
l'affichage (201A) d'informations d'énergie électrique initiale au moyen d'une barre de progression de commande d'énergie électrique (43), dans lequel les informations d'énergie électrique initiale comprennent un pourcentage d'énergie électrique totale restante qui est une énergie électrique restante initiale de dispositif maître et le pourcentage d'énergie électrique restante totale qui est une énergie électrique restante initiale de dispositif esclave, et l'énergie électrique totale restante est égale à la somme de l'énergie électrique restante initiale de dispositif maître et de l'énergie électrique restante initiale de dispositif esclave ;
la réception (201B) d'une opération de glissement sur la barre de progression de commande d'énergie électrique ;
la détermination (201C) d'informations d'énergie électrique cible selon l'opération de glissement, dans lequel les informations d'énergie électrique cible comprennent un pourcentage d'énergie électrique restante cible de dispositif maître représentant l'énergie électrique restante totale et le pourcentage d'énergie électrique restante cible de dispositif esclave représentant l'énergie électrique restante totale ; et
la détermination (201D) du sens de charge selon les informations d'énergie électrique initiale et les informations d'énergie électrique cible.

2. Procédé selon la revendication 1, dans lequel la détermination du sens de charge selon les informations d'énergie électrique initiale et les informations d'énergie électrique cible comprend :
la détermination du fait que le sens de charge est le premier sens de charge quand le pourcentage de l'énergie électrique restante cible de dispositif maître représentant l'énergie électrique restante totale est plus petit que le pourcentage de l'énergie électrique restante initiale de dispositif maître représentant l'énergie électrique restante totale, ou quand le pourcentage de l'énergie électrique restante cible de dispositif esclave représentant l'énergie électrique restante totale est plus grand que le pourcentage de l'énergie électrique restante initiale de dispositif esclave représentant l'énergie électrique restante totale ;
ou,
la détermination du fait que le sens de charge est le second sens de charge quand le pourcentage de l'énergie électrique restante cible de dispositif maître représentant l'énergie électrique restante totale est plus grand que le pourcentage de l'énergie électrique restante initiale de dispositif maître représentant l'énergie électrique restante totale, ou quand le pourcentage de l'énergie électrique restante cible de dispositif esclave représentant l'énergie électrique restante totale est plus petit que le pourcentage de l'énergie électrique restante initiale de dispositif esclave représentant l'énergie électrique restante totale.

3. Procédé selon la revendication 1, dans lequel l'affichage d'informations d'énergie électrique initiale au moyen d'une barre de progression de commande d'énergie électrique comprend :
l'acquisition (401A) de l'énergie électrique restante initiale de dispositif maître ;
la lecture (401B) de l'énergie électrique restante initiale de dispositif esclave correspondant au dispositif esclave au moyen d'une connexion établie par la ligne de connexion ; et
respectivement la détermination (401C) d'un pourcentage de longueur d'une barre de progression correspondant à l'énergie électrique restante initiale de dispositif maître représentant la barre de progression de commande d'énergie électrique et d'un pourcentage de longueur d'une barre de progression correspondant à l'énergie électrique restante initiale de dispositif esclave représentant la barre de progression de commande d'énergie électrique selon le pourcentage de l'énergie électrique restante initiale de dispositif maître représentant l'énergie électrique restante totale et le pourcentage de l'énergie électrique restante initiale de dispositif esclave représentant l'énergie électrique restante totale.

4. Procédé selon l'une quelconque des revendications 1 à 3, comprenant en outre :
l'acquisition (205, 410) de premières informations de consommation d'énergie électrique et d'énergie électrique restante courante de dispositif maître à des intervalles de temps prédéfinis, dans lequel les premières informations de consommation d'énergie électrique sont configurées pour indiquer une consommation d'énergie électrique du dispositif maître pendant la charge ;
la lecture (206, 411), à partir du dispositif esclave, de secondes informations de consommation d'énergie électrique et de l'énergie électrique restante courante de dispositif esclave au moyen de la connexion établie par la ligne de connexion aux intervalles de temps prédéfinis, dans lequel les secondes informations de consommation d'énergie électrique sont configurées pour indiquer une consommation d'énergie électrique du dispositif esclave pendant la charge ; et
la mise à jour (207, 413) de la barre de progression de commande d'énergie électrique selon un pourcentage de l'énergie électrique restante courante de dispositif maître, de l'énergie électrique restante courante de dispositif esclave, des premières informations de consommation d'énergie électrique et des secondes informations de consommation d'énergie électrique représentant respectivement l'énergie électrique restante totale.

5. Procédé selon la revendication 4, dans lequel lorsque le dispositif maître affiche des informations d'énergie électrique courante au moyen de la barre de progression de commande d'énergie électrique, des couleurs différentes sont utilisées pour marquer une barre de progression (431) correspondant à l'énergie électrique restante courante de dispositif maître, une barre de progression (432) correspondant à l'énergie électrique restante courante de dispositif esclave, une barre de progression correspondant aux premières informations de consommation d'énergie électrique et une barre de progression correspondant aux secondes informations de consommation d'énergie électrique.

6. Procédé selon la revendication 1, comprenant en outre :
l'envoi (414) d'une instruction d'arrêt de charge à la puce de gestion d'énergie du dispositif maître et à la puce de gestion d'énergie du dispositif esclave quand l'énergie électrique restante courante de dispositif maître atteint l'énergie électrique restante cible de dispositif maître ou quand l'énergie électrique restante courante de dispositif esclave atteint l'énergie électrique restante cible de dispositif esclave.

7. Appareil de charge, applicable dans un dispositif maître (120) dont une interface d'entrée/sortie E/S multifonctionnelle est reliée à une interface d'E/S multifonctionnelle d'un dispositif esclave (140) au moyen d'une ligne de connexion (160), comprenant :
un module de réception (510), configuré pour recevoir un signal de réglage et déterminer un sens de charge selon le signal de réglage ;
un premier module de détermination (520), configuré pour déterminer qu'une opération de charge est que le dispositif esclave est chargé par le dispositif maître quand le sens de charge est un premier sens de charge ;
un second module de détermination (530), configuré pour déterminer que l'opération de charge est que le dispositif maître est chargé par le dispositif esclave quand le sens de charge est un second sens de charge ; et
un premier module d'envoi (540), configuré pour envoyer une instruction de charge correspondante à une puce de gestion d'énergie du dispositif maître et à une puce de gestion d'énergie du dispositif esclave selon l'opération de charge ; **caractérisé en ce que**
le module de réception comprend :
un sous-module d'affichage (611), configuré pour afficher des informations d'énergie électrique initiale au moyen d'une barre de progression de commande d'énergie électrique, dans lequel les informations d'énergie électrique initiale comprennent un pourcentage d'énergie électrique restante totale qui est l'énergie électrique restante initiale de dispositif maître et le pourcentage d'énergie électrique restante totale qui est l'énergie électrique restante initiale de dispositif esclave représentant l'énergie électrique restante totale, et l'énergie électrique restante totale est égale à la somme de l'énergie électrique restante initiale de dispositif maître et de l'énergie électrique restante initiale de dispositif esclave ;
un sous-module de réception d'opération (612), configuré pour recevoir une opération de glissement sur la barre de progression de commande d'énergie électrique ;
un premier sous-module de détermination (613), configuré pour déterminer des informations d'énergie électrique cible selon l'opération de glissement, dans lequel les informations d'énergie électrique cible comprennent un pourcentage d'énergie électrique restante cible de dispositif maître représentant l'énergie électrique restante totale et le pourcentage d'énergie électrique restante cible de dispositif esclave représentant l'énergie électrique restante totale ; et
un deuxième sous-module de détermination (614), configuré pour déterminer le sens de charge selon les informations d'énergie électrique initiale et les informations d'énergie électrique cible.

8. Appareil selon la revendication 7, dans lequel le deuxième sous-module de détermination comprend :
un premier sous-module de détermination de sens (614A), configuré pour déterminer que le sens de charge est le premier sens de charge quand le pourcentage de l'énergie électrique restante cible de dispositif maître représentant l'énergie électrique restante totale est plus petit que le pourcentage de l'énergie électrique restante initiale de dispositif maître représentant l'énergie électrique restante totale, ou quand le pourcentage de l'énergie électrique restante cible de dispositif esclave représentant l'énergie électrique restante totale est plus grand que le pourcentage de l'énergie électrique restante initiale de dispositif esclave représentant l'énergie électrique restante totale ;
ou,
un second sous-module de détermination de sens (614B), configuré pour déterminer que le sens de charge est le second sens de charge quand le pourcentage de l'énergie électrique restante cible de dispositif maître représentant l'énergie électrique restante totale est plus grand que le pourcentage de l'énergie électrique restante initiale de dispositif maître représentant l'énergie électrique restante totale, ou quand le pourcentage de l'énergie électrique restante cible de dispositif esclave représentant l'énergie électrique restante totale est plus petit que le pourcentage de l'énergie électrique restante initiale de dispositif esclave représentant l'énergie électrique restante totale.

9. Appareil selon la revendication 7, dans lequel le sous-module d'affichage comprend :
un sous-module d'acquisition (611A), configuré pour acquérir l'énergie électrique restante initiale de dispositif maître ;
un sous-module de lecture (611B), configuré pour lire l'énergie électrique restante initiale de dispositif esclave correspondant au dispositif esclave au moyen d'une connexion établie par la ligne de connexion ; et
un troisième sous-module de détermination (611C), configuré pour déterminer respectivement un pourcentage de longueur d'une barre de progression correspondant à l'énergie électrique restante initiale de dispositif maître représentant la barre de progression de commande d'énergie électrique et un pourcentage de longueur d'une barre de progression correspondant à l'énergie électrique restante initiale de dispositif esclave représentant la barre de progression de commande d'énergie électrique selon le pourcentage de l'énergie électrique restante initiale de dispositif maître représentant l'énergie électrique restante totale et le pourcentage de l'énergie électrique restante initiale de dispositif esclave représentant l'énergie électrique restante totale.

10. Appareil selon l'une quelconque des revendications 7 à 9, comprenant en outre :
un module d'acquisition (650), configuré pour acquérir des premières informations de consommation d'énergie électrique et une énergie électrique restante courante de dispositif maître à des intervalles de temps prédéfinis, dans lequel les premières informations de consommation d'énergie électrique sont configurées pour indiquer une consommation d'énergie électrique du dispositif maître pendant la charge ;
un module de lecture (660), configuré pour lire, à partir du dispositif esclave, des secondes informations de consommation d'énergie électrique et une énergie électrique restante courante de dispositif esclave au moyen de la connexion établie par la ligne de connexion aux intervalles de temps prédéfinis, dans lequel les secondes informations de consommation d'énergie électrique sont configurées pour indiquer une consommation d'énergie électrique du dispositif esclave pendant la charge ; et
un module de mise à jour (670), configuré pour mettre à jour la barre de progression de commande d'énergie électrique selon un pourcentage de l'énergie électrique restante courante de dispositif maître, de l'énergie électrique restante courante de dispositif esclave, des premières informations de consommation d'énergie électrique et des secondes informations de consommation d'énergie électrique représentant respectivement l'énergie électrique restante totale.

11. Appareil selon la revendication 10, dans lequel lorsque le dispositif maître affiche des informations d'énergie électrique courante au moyen de la barre de progression de commande d'énergie électrique, des couleurs différentes sont utilisées pour marquer une barre de progression correspondant à l'énergie électrique restante courante de dispositif maître, une barre de progression correspondant à l'énergie électrique restante courante de dispositif esclave, une barre de progression correspondant aux premières informations de consommation d'énergie électrique et une barre de progression correspondant aux secondes informations de consommation d'énergie électrique.

12. Appareil selon la revendication 7, comprenant en outre :
un second module d'envoi (680), configuré pour envoyer une instruction d'arrêt de charge à la puce de gestion d'énergie du dispositif maître et à la puce de gestion d'énergie du dispositif esclave quand l'énergie électrique restante courante de dispositif maître atteint l'énergie électrique restante cible de dispositif maître ou quand l'énergie électrique restante courante de dispositif esclave atteint l'énergie électrique restante cible de dispositif esclave.

13. Procédé ou appareil selon l'une quelconque des revendications précédentes, dans lequel la ligne de connexion est une ligne de connexion de Type C, dont deux extrémités sont des connecteurs de Type C, et l'interface d'E/S multifonctionnelle du dispositif maître et celle du dispositif esclave sont des interfaces de Type C.

14. Programme informatique comprenant des instructions qui, quand elles sont exécutées sur un processeur d'un appareil, effectuent un procédé selon l'une quelconque des revendications 1 à 6.
